# EUROPÄISCHE PATENTANMELDUNG

(11) **EP 1 596 121 A1**
(43) Veröffentlichungstag der Anmeldung: **16.11.2005**
(21) Anmeldenummer: 05009844.1
(22) Anmeldetag: 04.05.2005
(51) Int. Cl.: F16L 59/02

(54) **Thermischer Schild**

(30) Priorität: 10.05.2004 DE 102004022934
(71) Anmelder: Linde Aktiengesellschaft, 65189 Wiesbaden (DE); MAN DWE GmbH, 94469 Deggendorf (DE); Max-Planck-Gesellschaft zur Förderung der Wissenschaften e.V., 80539 München (DE)
(72) Erfinder: Leher, Franz, 94577 Winzer (DE); Lehner, Georg, 94505 Bernried (DE); Muschelknautz, Sebastian, Dr., 81479 München (DE); Nagel, Michael, Dr., 17509 Lubmin (DE); Posselt, Heinz, Dr., 83043 Bad Aibling (DE); Schauer, Felix, Dr., 17489 Greifswald (DE)
(74) Vertreter: Kasseckert, Rainer

(57) **Zusammenfassung**

Ein thermischer Schild mit einem wärmeleitenden Körper (8), wobei das Material, aus dem der Körper (8) besteht, einen Faserverbundwerkstoff (1a,1b,1c,1d), bevorzugt Kohlefaser, Glasfaser, Glasfaser verstärkten Kunststoff und/oder Aramid, und ein Metall (2a,2b,2c) umfasst.

## Beschreibung

Die Erfindung betrifft einen thermischen Schild mit einem wärmeleitenden Körper.

Im Rahmen der physikalischen Fusionsforschung werden Experimente an einem mehrere Millionen Grad heißen Wasserstoffplasma durchgeführt. Das Plasma wird mittels eines Magnetfelds in einem im Wesentlichen ringförmigen Raum eingeschlossen. Das Magnetfeld wird durch eine spezielle Anordnung von ebenen und nicht-ebenen supraleitenden Magnetspulen erzeugt, die mit tiefkaltem Helium auf Temperaturen um 4 Kelvin abgekühlt werden.

Zur Wärmeisolierung zwischen dem heißen Plasma und dem tiefkalten Supraleitungssystem werden unter anderem auch thermische Schilde eingesetzt. Der thermische Schild besitzt einen wärmeleitenden Körper, der beispielsweise mit flüssigem Stickstoff oder mit kaltem Heliumgas gekühlt wird, um den Wärmeübertrag durch Wärmestrahlung zu minimieren.

Der wärmeleitende Körper des thermischen Schilds wird bisher häufig aus Kupfer hergestellt. Kupfer besitzt aufgrund seiner hohen Wärmeleitfähigkeit den Vorteil, dass eine schnelle und gleichmäßige Abkühlung des gesamten Schilds auf die gewünschte Temperatur erreicht werden kann.

Zur Isolierung starker supraleitender Magnetspulen ist Kupfer allerdings weniger geeignet, da durch die Magnetspulen Wirbelströme im Kupfer induziert werden, die starke auf den thermischen Schild wirkende Kräfte hervorrufen. Bei solchen Anwendungen wird daher bisher anstelle von Kupfer Edelstahl als Material für den Körper des thermischen Schilds verwendet.

Bei den oben genannten plasmaphysikalischen Experimenten ist das Plasma in einem verwundenen schlauchförmigen Raum eingeschlossen, um den das supraleitende Magnetsystem möglichst dicht angeordnet werden muss, damit die erforderlichen hohen Magnetfelder in dem Plasmaraum erzeugt werden können. Der zur Isolierung eingesetzte thermische Schild muss deshalb an die Konturen des Plasmaraumes angepasst werden. Edelstahl lässt sich jedoch nur schwer in solch geschwungene Konturen bringen und ein Kupferschild ist aufgrund der starken Magnetfelder nicht oder nur bedingt einsetzbar.

Aufgabe vorliegender Erfindung ist es daher, einen thermischen Schild zu entwickeln, welcher eine gute Wärmeleitfähigkeit besitzt, sich auch an komplexe Formen anpassen lässt und in dem die Bildung von Wirbelströmen möglichst unterdrückt wird.

Diese Aufgabe wird durch einen thermischen Schild mit einem wärmeleitenden Körper gelöst, wobei das Material, aus dem der Körper besteht, einen Faserverbundwerkstoff, bevorzugt Kohlefaser, Glasfaser, Glasfaser verstärkten Kunststoff und / oder Aramid, und ein Metall umfasst.

Der Körper des erfindungsgemäßen thermischen Schilds wird aus einem Faserverbundwerkstoff gefertigt. Als Faserverbundwerkstoffe kommen insbesondere Kohle- und Glasfasergewebe sowie Glasfaser verstärkte Kunststoffe oder Aramid in Betracht. Solche, beispielsweise auch aus dem Automobil- oder Flugzeugbau bekannte Faserverbundwerkstoffe lassen sich gut verarbeiten und in verschiedenste Form bringen. Der Formgebung des thermischen Schilds sind insoweit praktisch keine Grenzen gesetzt. Die Faserverbundwerkstoffe haben zudem den Vorteil, dass bei vergleichsweise geringem Gewicht äußerst stabile thermische Schilde geformt werden können.

Der thermische Schild kann als ein einziges Stück ausgeführt sein oder auch mehrere einzelne Körper aufweisen. Insbesondere bei einer komplexen Formgebung des thermischen Schilds, wie dies beispielsweise bei einem thermischen Schild für die eingangs genannten Plasma- beziehungsweise Fusionsexperimente der Fall ist, wird der Schild aus mehreren einzelnen Körpern gebildet, die jeweils in der erfindungsgemäßen Weise ausgeführt werden. Die Größe der Einzelkörper beträgt typischerweise mehr als 200 × 200 mm². Bei einfachen Formen können der oder die Körper aber auch einige Quadratmeter groß sein.

Die für den thermischen Schild wesentliche gute Wärmeleitfähigkeit des Körpers wird dadurch erreicht, dass in den Körper Elemente aus Metall, die eine hohe Wärmeleitfähigkeit besitzen, eingearbeitet werden. Aufgrund seiner hohen Wärmeleitfähigkeit wird bevorzugt Kupfer eingesetzt. Je nach Anordnung, Anzahl und Dimensionierung der Metallelemente kann die Wärmeleitfähigkeit des thermischen Schilds beeinflusst und gezielt eingestellt werden.

Die Metallelemente können im Wesentlichen beliebige Form haben und beispielsweise als Rechtecke oder Quadrate ausgeführt sein. Vorzugsweise werden in den Körper aber stab-, faden-, streifen- oder netzförmige Metallelemente eingearbeitet. Wird der thermische Schild zur Wärmeisolierung von supraleitenden Magneten eingesetzt, so wird durch eine längliche Ausführung der Metallelemente die Bildung von Wirbelströmen in den Metallelementen wirkungsvoll unterdrückt. So können sich beispielsweise bei einem streifenförmigen Metallelement nur kleine, maximal über die Breite des Metallstreifens erstreckende, geschlossene Stromschleifen ausbilden. Die induzierten Kräfte bleiben entsprechend gering.

Durch geeignete Anordnung der insbesondere länglichen Metallelemente lässt sich eine über den gesamten Körper hohe Wärmeleitfähigkeit erzielen. Werden die Metallstreifen, Metallfäden oder Metallstäbe genügend dicht nebeneinander, bevorzugt parallel nebeneinander, angeordnet, so kann auch quer zu den Metallelementen eine ausreichende Wärmeleitfähigkeit erzielt werden. Die Stromleitfähigkeit in Querrichtung bleibt aber dennoch, insbesondere bei Verwendung von Glasfaserwerkstoffen, nahezu Null, so dass Wirbelströme verhindert werden.

Es hat sich gezeigt, dass Metallelemente mit einer Dicke zwischen 0,1 und 3 mm, bevorzugt zwischen 0,1 und 1 mm, besonders günstig sind. Die Flächenausdehnung eines Metallelements beträgt vorzugsweise mehr als 200 × 200 mm², das Metallelement kann sich aber je nach Anwendung auch über den gesamten Körper des thermischen Schilds erstrecken. Mit Metallelementen dieser Dimensionierung lässt sich die Wärmeleitfähigkeit des thermischen Schilds entsprechend den Anforderungen einstellen. Andererseits sind die Metallelemente dünn genug, so dass sie fest in den Faserverbundwerkstoff eingearbeitet werden können.

Der Körper des thermischen Schilds kann zum Beispiel aus Glasfasergewebe gefertigt werden, welches mit einer harzähnlichen Masse getränkt ist. Auf das Glasfasergewebe werden die Metallelemente, beispielsweise Metallfäden oder ein Metallnetz, gelegt. Werden die Metallelemente entsprechend den obigen Ausführungen dimensioniert, so fließt das auf oder in dem Glasfasergewebe vorhandene Harz um die einzelnen Metallelemente und bindet diese stabil in die Gesamtstruktur ein. Bei der Verwendung eines netzähnlichen Metallelements wird eine besonders stabile Verbindung erzielt, da das Metallnetz mit dem Harz durchtränkt wird.

Vorzugsweise weist der Körper des thermischen Schilds mehrere Lagen des Faserverbundwerkstoffs und des Metalls auf. So werden zum Beispiel mehrere Lagen eines Fasergewebes entsprechend der gewünschten Gestalt aufeinander gelegt und geformt. Zwischen einzelne der Gewebelagen werden die Metallelemente eingebracht. Durch die Verbindung der Gewebelagen untereinander werden die Metallelemente in dem Körper fixiert. Die Anzahl und Stärke der einzelnen Lagen aus Glasfasergeweberichtet sich insbesondere nach der geforderten Stabilität des thermischen Schilds. In der Regel wird eine Gesamtdicke von weniger als 20 mm, besonders bevorzugt weniger als 10 mm ausreichend sein. Besonders stark beanspruchte thermische Schilde können aber durchaus auch mehrere Zentimeter dick ausgeführt sein.

Vorimprägnierte Faserverbundwerkstoffe, sogenannte Prepregs, haben sich besonders bewährt. Diese Faserverbundwerkstoffe sind bereits mit einem Harz oder einer harzähnlichen Masse imprägniert. Die Aushärtung des Faserverbundwerkstoffs erfolgt meist in einem Autoklaven unter dem Einfluss von Druck, Temperatur und Vakuum. Hierbei werden die zunächst lose aufeinander gelegten Faserteile und die dazwischen platzierten Metallelemente kompaktiert. Das Harz verteilt sich gleichmäßig über den gesamten Körper und härtet unter Vemetzung aus. Es bildet sich eine gleichmäßige stabile Struktur, in die die Metallelemente fest eingebettet sind.

Bevorzugt wird der Aufbau des Körpers aus verschiedenen Lagen symmetrisch ausgeführt. In einer Richtung senkrecht zur Körperoberfläche werden dabei die Lagen aus Faserverbundwerkstoff und Metallelementen symmetrisch zur Mittelebene des Körpers angeordnet. Die einzelnen Lagen besitzen materialbedingt unterschiedlich starke Wärmeausdehnungskoeffizienten. Durch die symmetrische Anordnung wird bei der Abkühlung des thermischen Schilds ein Bi-Metall-ähnlicher Effekt vermieden. Die durch die Abkühlung hervorgerufene Kontraktion der Lagen erfolgt symmetrisch zur Mittelebene, so dass sich der Körper gleichmäßig zusammenzieht ohne zu verbiegen.

Der thermische Schild wird zur Reduzierung des Wärmeübertrags durch Wärmestrahlung eingesetzt. Die von einem Körper abgestrahlte Wärme ist unter anderem proportional zur Emissivität der Körperoberfläche, wobei die Emissivität von Metallen deutlich niedriger als die von Kunststoffen oder Faserverbundwerkstoffen ist. Von Vorteil besteht deshalb zumindest eine Außenfläche des Körpers des thermischen Schilds aus einem Metall. Dies kann dadurch erfolgen, dass zumindest ein Teil der Metallelemente direkt auf der Außenfläche des aus dem Faserverbundwerkstoff gefertigten Körpers angebracht werden.

Es hat sich jedoch als günstiger erwiesen, die Metallelemente im Inneren des Körpers des thermischen Schilds vorzusehen, da auf diese Weise eine festere Verbindung zwischen den Metallelementen und dem restlichen Körper, insbesondere dem Faserverbundwerkstoff, hergestellt werden kann. Zur Verringerung der Emissivität wird in diesem Fall auf die aus Faserverbundwerkstoff bestehende Oberfläche des Körpers ein Metall, beispielsweise Aluminium, aufgedampft oder es wird eine Metallfolie aufgeklebt.

Zur Kühlung des thermischen Schilds sind vorzugsweise Kühlrohre vorgesehen, die auf einer Oberfläche des Körpers befestigt, bevorzugt mit dieser verklebt oder verlötet sind. Die Kühlrohre können auch direkt in die oberste Lage aus Faserverbundwerkstoff einlaminiert werden, das heißt, die Kühlrohre werden von einer Lage Faserverbundwerkstoff bedeckt. Ferner hat es sich auch als günstig erwiesen, zur Führung des Kühlmediums geeignete Leitungen aus dem Faserverbundwerkstoff selbst zu bilden.

Die Kühlrohre beziehungsweise Leitungen für das Kühlmedium werden bevorzugt nur an einem Ende fest an dem Körper befestigt und ansonsten über flexible wärmeleitende Zwischenstücke, zum Beispiel flexible Kupfer-Litzen, mit dem Körper verbunden. Weiter kann es von Vorteil sein, die Kühlrohre aus mehreren Teilelementen zusammenzusetzen, die untereinander in wärmeleitendem Kontakt stehen. Auf diese Weise werden thermische Spannungen, die aus unterschiedlichen Abkühlungsgeschwindigkeiten der Kühlrohre und des Körpers resultieren können, vermieden.

Der erfindungsgemäße thermische Schild kann besonders vorteilhaft bei der Isolierung supraleitender Magnete eingesetzt werden, da durch geeignete Wahl und Anordnung der Metallelemente die Wirbelstrombildung in dem thermischen Schild wesentlich verringert beziehungsweise sogar ganz verhindert werden kann. Hier hat es sich insbesondere bewährt, einzelne gegeneinander isolierte längliche Metallelemente, wie zum Beispiel isolierte Drähte oder beabstandet angeordnete Drähte, oder, ganz besonders bevorzugt, ein aus isolierten Metalldrähten hergestelltes Netz zu verwenden. Durch geeignete Wahl der Größe, Anzahl und Anordnung der Metallelemente kann die Wärmeleitung in dem Körper des thermischen Schilds gezielt eingestellt werden. Die Verwendung von Faserverbundwerkstoffen gestattet die Herstellung von nahezu beliebig geformten thermischen Schilden. Zudem kann durch die erfindungsgemäße Ausführung im Vergleich zu einem thermischen Schild aus Metall Gewicht eingespart werden.

Der erfindungsgemäße thermische Schild kann mit Vorteil auch bei der thermischen Isolierung eines Tanks eines mit Wasserstoff angetriebenen Fahrzeugs eingesetzt werden. Hierbei wirkt sich zum einen das geringe Gewicht des thermischen Schilds positiv aus. Außerdem ist es im Fahrzeugbau häufig erforderlich, ganz speziell an die Platzverhältnisse im Fahrzeug angepasste Tankformen zu verwenden. Die thermische Isolierung sollte dann natürlich ebenso platzsparend ausgeführt sein. Hier bringt die gute Formbarkeit der Faserwerkstoffe große Vorteile.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: einen Schnitt durch ein Teilstück eines thermischen Schilds,
- Figur 2: einen Schnitt entlang der Linie A - A in Figur 1 und
- Figur 3: einen alternativen Aufbau des Körpers.

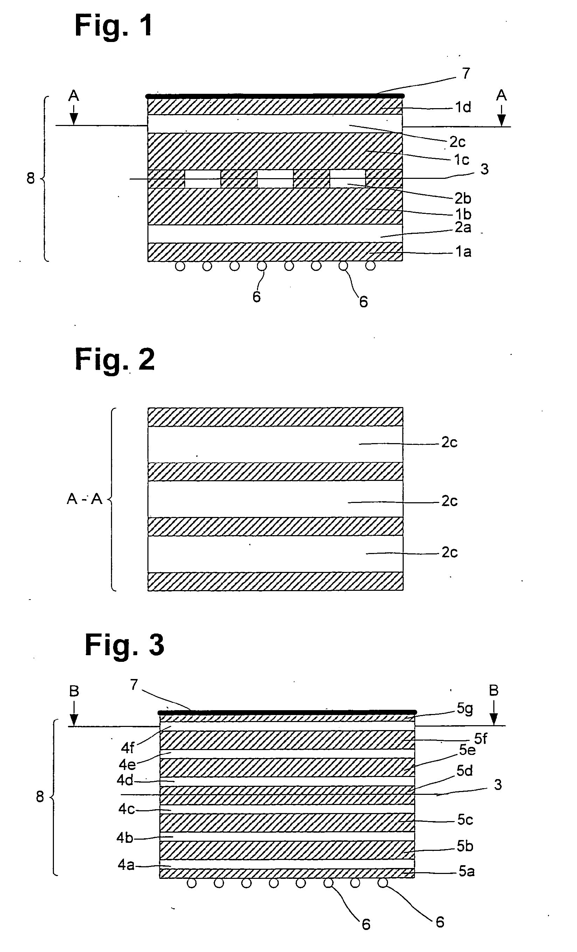

In Figur 1 ist ein Schnitt durch ein Teilstück eines thermischen Schilds gezeigt. Das gezeigte Teilstück stellt einen Ausschnitt aus dem gesamten thermischen Schild dar. Der Körper 8 des thermischen Schilds wird aus mehreren Lagen 1 a, 1 b, 1 c, 1 d eines Glasfasergewebes hergestellt. Zwischen die Lagen 1 a, 1b, 1 c, 1 d werden schmale Streifen 2a, 2b, 2c eines Kupferbleches gelegt. Die Streifen 2a und 2c verlaufen im Wesentlichen parallel zueinander, wogegen die mittleren Kupferstreifen 2b senkrecht zu den Blechstreifen 2a, 2c und senkrecht zur Zeichenebene angeordnet sind. In einer Ebene senkrecht zur Zeichenebene sind mehrere der Kupferstreifen parallel zueinander angeordnet. Dies ist in Figur 2 am Beispiel der Ebene A - A gezeigt. Die gesamte Anordnung ist symmetrisch zu der senkrecht zur Zeichenebene verlaufenden Ebene 3 aufgebaut.

Anstelle der in Figur 1 gezeigten Metallstreifen 2a, 2b, 2c ist es auch günstig, Metallnetze 4a, 4b, 4c, 4d, 4e, 4f für die Wärmeleitung in dem thermischen Schild zu verwenden. Ein so aufgebauter thermischer Schild ist in Figur 3 dargestellt. Abwechselnd mit Kohlefaserlagen 5a, 5b, 5c, 5d, 5e, 5f, 5g sind Netze 4a, 4b, 4c, 4d, 4e, 4f aus Kupferdraht in den Körper des thermischen Schilds eingelegt. Der Aufbau der einzelnen Lagen 4a, 4b, 4c, 4d, 4e, 4f, 5a, 5b, 5c, 5d, 5e, 5f, 5g ist wiederum symmetrisch zur Mittelebene 3. Die Kohlefaserlagen 5a, 5b, 5c, 5d, 5e, 5f, 5g sind bevorzugt vorimprägniert und werden unter dem Einfluss von Druck und Temperatur in bekannter Weise miteinander verbunden. Es ist aber auch möglich, die einzelnen Lagen 5a, 5b, 5c, 5d, 5e, 5f, 5g durch manuelles Laminieren miteinander zu verbinden.

In jedem Fall fließt das Harz auch durch die Maschen der zwischen den Kohlefaserlagen 5a, 5b, 5c, 5d, 5e, 5f, 5g positionierten Kupfernetze 4a, 4b, 4c, 4d, 4e, 4f, so dass diese nach dem Aushärten durch das vernetzte Harz fest im Inneren des thermischen Schilds verankert sind.

Die Kupfernetze 4a, 4b, 4c, 4d, 4e, 4f werden bevorzugt aus isoliertem Draht gewebt, so dass der elektrische Strom innerhalb des Netzes 4a, 4b, 4c, 4d, 4e, 4f jeweils nur entlang eines Kupferdrahtes des Netzes 4a, 4b, 4c, 4d, 4e, 4f fließen kann. Wirbelströme können somit innerhalb eines Netzes 4a, 4b, 4c, 4d, 4e, 4f nicht entstehen. Bei der Verwendung solcher Netze aus isolierten Drähten ist es möglich, eine Lage 4a, 4b, 4c, 4d, 4e, 4f jeweils aus einem einzigen Netz aufzubauen. Anders als die in Figur 2 gezeigte streifenförmige Anordnung der Kupferstreifen 2c erstreckt sich in diesem Fall in einer Ebene senkrecht zur Zeichenebene, zum Beispiel in der Ebene B - B, ein Netz 4f über den gesamten Querschnitt des Körpers 8.

Es hat sich gezeigt, dass solche Metallnetze auch aus nicht isolierten Drähten hergestellt werden können. In diesem Fall ist es jedoch zweckmäßig, analog zu der Ausführung gemäß Figur 2 in einer Ebene 4a, 4b, 4c, 4d, 4e, 4f mehrere streifenförmige Metallnetze beabstandet nebeneinander anzuordnen, um die Wirbelstrombildung klein zu halten. Die Streifen zweier benachbarter Lagen von Metallnetzen, beispielsweise die Ebenen 4c und 4d, sind dann bevorzugt jeweils senkrecht zueinander ausgerichtet, um die Wärme möglichst gleichmäßig innerhalb des thermischen Schildes zu verteilen.

Durch die Anzahl der in den Körper 8 des thermischen Schilds eingebrachten Metallelemente, in Figur 3 der Kupfernetze 4a, 4b, 4c, 4d, 4e, 4f, lässt sich die Wärmeleitfähigkeit des thermischen Schildes definiert einstellen.

Auf der einen Seite des Körpers 8 sind Kühlrohre 6 auf die Faserwerkstofflage 1a bzw. 5a aufgeklebt. Die Kühlrohre verlaufen mäanderförmig auf der Oberfläche und werden mit flüssigem Stickstoff oder gasförmigem Helium als Kühlmittel gespeist. Die ausgehend von den Kühlrohren 6 erste Lage 2a bzw. 4a von Metalielementen befindet sich möglichst nahe an der Oberfläche desKörpers 8, um einen guten Wärmeübergang von den Kühlrohren 6 auf die Metalllage 2a, 4a zu erreichen. Die Metalllage, das heißt die Metallstreifen 2a bzw. das Kupfernetz 4a, werden lediglich von einer dünnen Fasergewebelage 1a, 5a bedeckt, die zu einer stabilen Befestigung der Metalllage 2a, 4a dient.

Auf der gegenüberliegenden Seite des thermischen Schilds ist eine Aluminiumfolie 7 auf der äußersten Fasergewebeschicht 1 d bzw. 5g aufgeklebt. Die Aluminiumfolie 7 hat eine deutlich geringere Emissivität als der Faserwerkstoff, wodurch die Wärmestrahlung wesentlich gesenkt werden kann.

## Patentansprüche

1. Thermischer Schild mit einem wärmeleitenden Körper (8), **dadurch gekennzeichnet, dass** das Material, aus dem der Körper (8) besteht, einen Faserverbundwerkstoff, bevorzugt Kohlefaser, Glasfaser, Glasfaser verstärkten Kunststoff und / oder Aramid, und ein Metall umfasst.

2. Thermischer Schild nach Anspruch 1, **dadurch gekennzeichnet, dass** der Körper (8) stab-, faden-, streifen- oder netzförmige Metallelemente (2a, 2b, 2c) beinhaltet.

3. Thermischer Schild nach Anspruch 2, **dadurch gekennzeichnet, dass** die Metallelemente (2a, 2b, 2c) eine Dicke zwischen 0,1 mm und 3 mm, bevorzugt weniger als 1 mm besitzen.

4. Thermischer Schild nach einem der Ansprüche 1 bis 3, **dadurch gekennzeichnet, dass** der Körper (8) mehrere Lagen des Faserverbundwerkstoffs (1a, 1 b, 1 c, 1 d) und des Metalls (2a, 2b, 2c) aufweist.

5. Thermischer Schild nach Anspruch 4, **dadurch gekennzeichnet, dass** in einer Richtung senkrecht zur Körperoberfläche die Lagen (1 a, 1 b, 1 c, 1 d, 2a, 2b, 2c) symmetrisch zur Mittelebene des Körpers (8) angeordnet sind.

6. Thermischer Schild nach einem der Ansprüche 1 bis 5, **dadurch gekennzeichnet, dass** zumindest eine Außenfläche des Körpers (8) aus einem Metall besteht.

7. Thermischer Schild nach einem der Ansprüche 1 bis 6, **dadurch gekennzeichnet, dass** auf einer Oberfläche des Körpers (8) Kühlrohre (6) befestigt sind.

8. Thermischer Schild nach einem der Ansprüche 1 bis 7, **dadurch gekennzeichnet, dass** die Kühlrohre aus dem Faserverbundwerkstoff gebildet sind oder von dem Faserverbundwerkstoff umgeben sind.
